(19) **Europäisches Patentamt**

**European Patent Office**

**Office européen des brevets**

(11) **EP 0 960 872 B1**

(12) **EUROPÄISCHE PATENTSCHRIFT**

(45) Veröffentlichungstag und Bekanntmachung des Hinweises auf die Patenterteilung:
**04.08.2004   Patentblatt 2004/32**

(51) Int Cl.[7]: **C04B 41/50**, C09D 1/00

(21) Anmeldenummer: **99109888.0**

(22) Anmeldetag: **20.05.1999**

(54) **Verwendung von stabilen Chrom-(III)-Verbindungen als Färbelösung für Keramik**

Use of stabile chromium (III) compounds as a paint for ceramics

Utilisation de composés de chrome (III) comme une peinture pour céramiques

(84) Benannte Vertragsstaaten:
**AT BE CH CY DE DK ES FI FR GB GR IE IT LI LU MC NL PT SE**

(30) Priorität: **26.05.1998   DE 19823888**

(43) Veröffentlichungstag der Anmeldung:
**01.12.1999   Patentblatt 1999/48**

(73) Patentinhaber: **BK Giulini Chemie GmbH & Co. OHG**
**67065 Ludwigshafen (DE)**

(72) Erfinder:
• **Staffel, Thomas, Dr.**
**67269 Grünstadt (DE)**
• **Straub, Jürgen**
**68305 Mannheim (DE)**
• **Klein, Thomas, Dr,**
**69121 Heidelberg (DE)**

(56) Entgegenhaltungen:
**DE-A- 2 116 299**

• **DATABASE WPI Section Ch, Week 9314 Derwent Publications Ltd., London, GB; Class A97, AN 93-115348 XP002114683 & SU 1 728 207 A (CONSTR CERAMIC RES INST) , 23. April 1992 (1992-04-23)**
• **DATABASE WPI Section Ch, Week 9343 Derwent Publications Ltd., London, GB; Class L02, AN 93-343481 XP002114684 & SU 1 768 565 A (KRASNYI STROITEL WKS), 15. Oktober 1992 (1992-10-15)**

## Beschreibung

Die vorliegende Erfindung betrifft die Verwendung von stabilen Chrom-(III)-Verbindungen, insbesondere in Form von Färbelösungen, die bei der Färbung von Keramik Verwendung finden.

In der Keramikindustrie wurden bisher zum Färben und zur Dekoration von unglasierter Keramik unter anderem Verbindungen der Übergangsmetalle z. B. des Chroms, Kobalts, Eisens, Mangans, Nickels, Golds etc. in Form ihrer wasserlöslichen Salze (Chloride, Acetate, Nitrate oder Sulfate) eingesetzt, so wie es z. B. in der DE-OS 21 17 449 beschrieben ist. Diese Verbindungen wurden deshalb ausgewählt, weil sie in wäßriger Lösung gegenüber Hydrolyse und Oxydation stabil sind.

In Ceramic Forum International/DKG 70, 1993, No. 4 wurde über die Grundlagen der Dekoration von unglasierten Fliesen mit keramischen Färbelösungen berichtet. Hier werden die dabei verwendbaren Produkte der Anmelderin und die technologischen Grundlagen für den Auftrag auf die keramischen Fliesen beschrieben.

Auch in der CH 575 894 wird ein solches Verfahren beschrieben, das dadurch gekennzeichnet ist, daß man zuerst die Lösung des Fällungs- und Ausflockungsmittels in die gesamte Oberflächenzone einbringt und nachher in begrenzte Partien der Oberflächenzone entsprechend dem zu bildenden Dekor verschiedene Metallsalzlösungen eindiffundieren lässt. Als Metallsalzlösungen werden hier die farbigen Salze der Übergangsmetalle z.B. Kobalt, Chrom und Eisen, bzw. deren Mischungen verwendet. Als Fällungs- und Ausflockungsmittel wird Hydrochinolin eingesetzt. Mit diesem Verfahren gelingt auch das Dekorieren der Oberflächen mittels Umdruck, Siebdruck oder Handauftrag.

In der DE 31 09 927 C2 wird ebenfalls ein Verfahren zur Erzeugung eines Dekors (oder Porphyreffektes) auf keramischen Material beschrieben. Dieses Verfahren ist dadurch gekennzeichnet, daß das ungebrannte keramische Material mittels einer Siebdruckschablone bedeckt wird und darauf Lösungen von färbenden Metallverbindungen in einem hydrophilen organischen Lösungsmittel oder entsprechende Dispersionen von flüssigen keramischen Farbzubereitungen aufgebracht werden. Als färbende Metallsalze werden auch hier die Salze der Übergangsmetalle eingesetzt.

Insbesondere die wäßrigen Chrom-Verbindungen, mit der Oxydationsstufe VI, z.B. die Kaliumdichromate wurden bevorzugt deswegen eingesetzt, weil sie nitrat- und sulfatfrei sind und somit keine korrosiven Gase beim Brennen der Keramik entwickeln, ferner in der wäßrigen Lösung eine hohe Metallionenkonzentration aufweisen und auch in Mischung mit anderen Metallverbindungen stabil und verträglich sind.
Neben der chemischen Stabilität ist es jedoch ebenso wichtig, daß diese Verbindungen in der Anwendung als keramische Färbelösungen die dort erwünschten Eigenschaften aufweisen. Eine sehr wichtige Eigenschaft, welche diese Färbelösungen erfüllen müssen, ist ihre Fähigkeit in die unglasierte Keramikoberfläche tief genug einzudringen. Nur so ist es gewährleistet, daß der erzeugte Farbton sich intensiv genug nach dem Brennen entwickeln bzw. entstehen kann. Die Eindringtiefe muß insbesondere auch deshalb groß genug sein, weil das Keramikstück nach dem Brennen an der Oberfläche mechanisch nachbehandelt, insbesondere geschliffen wird. Dabei wird ein Teil des eingefärbten Oberflächenmaterials einige zehntelmillimeter abgetragen. Dabei verliert der Keramikgegenstand den intensiven Farbton, wenn die Eindringtiefe nicht ausreichend groß war.
Natürlich hängt die Farbintensität auch noch davon ab, in welcher Konzentration die Färbelösungen aufgetragen werden. Unter Konzentration wird hier die Konzentration an färbenden Metallkationen verstanden. Es ist klar, daß je höher diese Konzentration ist, um so intensiver kann die Verbindung färben. Es ist jedoch aus chemisch-physikalischen Gründen nicht möglich, die Konzentration beliebig zu steigern, weil sonst die Stabilität der Lösungen nicht mehr gegeben ist. Als stabil wird dann eine Metallsalzlösung bezeichnet, wenn sie keine Ausfällungen oder Ausflockungen auch bei höherer lonenkonzentration zeigt. Ein wesentlicher Stabilitätsfaktor ist der pH-Wert der Lösung. Es ist bekannt, daß solche Verbindungen immer nur in einem bestimmten pH-Intervall stabil sind.

Weitere Anforderungen an diese Verbindungen werden von der Seite des Arbeitsschutzes gestellt. Die Anwendung dieser Verbindungen sollte möglichst unbedenklich sein, ohne aufwendige Schutzmaßnahmen während ihrer Anwendung treffen zu müssen.

Über einige dieser Metallsalzlösungen weiß der Fachmann jedoch, daß ihre Anwendung in Bezug auf die menschliche Gesundheit bedenklich ist. Der Gesetzgeber fordert in diesen Fällen entweder besondere Arbeitsschutzmaßnahmen oder den vollständigen Ersatz dieser Verbindungen gegen gleichwertige. Im Fall der Chrom(VI)-Verbindungen entschied der Gesetzgeber, daß ab 1998 diese Verbindungen ersetzt werden müssen, denn die üblicherweise eingesetzten Chrom-(VI)-Verbindungen sind bekanntermaßen beim Verschlucken oder Einatmen sehr toxisch, sie reizen die Schleimhäute und insbesondere die Augen, wenn man sie in Form eines Aerosols einsetzt, und schließlich, sind sie gemäß einer Einstufung des BGA krebserregend. All diese Eigenschaften sind für ihre weitere Verwendung natürlich hinderlich, bzw. sie verbietet sich von selbst.

Es bestand daher die Aufgabe, geeignete Chromverbindungen zu finden, die die gleichen Eigenschaften für den geforderten Verwendungszweck aufweisen, wie die Chrom-(VI)-Verbindungen, aber die oben geschilderten negativen Eigenschaften nicht aufweisen.

Die Lösung dieser Aufgabe konnte überraschenderweise durch die Verwendung von neutralisierten oder teilneutralisierten Chrom-(III)-Komplexverbindung gefunden werden, die Bestandteil von keramischen Färbelösungen sind und die erhältlich sind durch die Umsetzung einer Chrom-(III)-Verbindung mit einer organischen Dicarbonsäure der allg. Formel (COOH)-(CH$_2$)$_n$-(COOH), wobei der Index n von 0 bis 10 läuft oder einer ungesättigten, organischen Dicarbonsäure, insbesondere Maleinsäure und Fumarsäure, indem man die Chrom-(III)-Verbindung mit der wäßrigen Lösung der Carbonsäure bei Temperaturen zwischen 40 bis 60 °C, vorzugsweise bei 55 °C unter Rühren behandelt und die Lösung nach der Filtration, mit Alkali, vorzugsweise mit konz. Ammoniak, auf einen pH-Wert von 5,5 bis 6,5 einstellt, wobei die Chrom-(III)-Komplexlösung einen Chromgehalt von 5 bis 10 Gew. %, vorzugsweise einen Chromgehalt von 5 bis 7 Gew. % aufweist.

Als organische, gesättigte Dicarbonsäure wird allem die Oxalsäure in ihrer käuflichen Form eingesetzt. Als ungesättigte, organische Dicarbonsäure wird bevorzugt die Maleinsäure eingesetzt. Die so hergestellten Chrom-(III)-Verbindungen können alleine oder in Mischungen mit farbige Metallsalze enthaltenden Färbelösungen zur Färbung von Keramikoberflächen eingesetzt werden.

Die erfindungsgemäßen Verbindungen, z.B. die Chrom-(III)-Oxalat-Lösung, weist einen Cr-Gehalt von 5 bis 10 Gew. % auf, vorzugsweise einen Chrom-Gehalt von 5 bis 7 Gew. % und einen pH Wert von 3 bis 3,5. Es war für den Fachmann überraschend, daß diese neutralisierte oder teilneutralisierte Chrom-(III)-Verbindung in der Anwendung besonders vorteilhafte Eigenschaften aufweisen, wie im nachfolgenden ausgeführt wird.

Die Eignung der erfindungsgemäßen Chrom-(III)-Verbindungen als Färbelösung für die Herstellung von dekorierten Keramikgegenständen wird nach folgenden Bewertungskriterien beurteilt:

1. der erzielte Farbton
2. Eindringtiefe in die Keramikoberfläche
3. Stabilität bzw. der Grad der Entmischung, wenn mit Mischungen gearbeitet wird. oder auch die sog. chemische und physikalische Verträglichkeit mit anderen färbenden Metallsalzen

Die untersuchten anwendungstechnischen Ergebnisse sind wegen der Übersichtlichkeit in Form von Tabelle dargestellt.

### Herstellungsbeispiel 1:

In einem 150 ml Becherglas wurde destilliertes. Wasser vorgelegt. Unter Rühren wurde die Oxalsäure der Formel (COOH)$_2$ x 2H$_2$O zugegeben und dann auf 50-60 °C erwärmt. Danach wurde Chrom-(III)-Hydroxyd portionsweise zugegeben und dann für ca. 30 Minuten bei 90-95 °C gerührt. Danach hatten sich die Reaktionspartner vollständig umgesetzt Dann wurde auf 40 °C abgekühlt und filtriert und dann mit konz. Ammoniak auf ein pH-Wert von 6 eingestellt.

In der Tabelle 1 werden unterschiedlich konzentrierte Chrom-(III)-Oxalat Lösungen hergestellt.

Tabelle 1

| Einwaage in g | 6 %-ige Lösung | 8 %-ige Lösung | 10 %-ige Lösung | 12 %-ige Lösung |
|---|---|---|---|---|
| **Wasser** | 66,2 | 54,9 | 43,7 | 32,5 |
| **Chromhydroxyd** | 13,9 | 18,5 | 23,1 | 27,7 |
| **Oxalsäure** | 19,9 | 26,6 | 33,2 | 39,8 |

Diese Lösungen waren sämtlich stabil, d.h. in keiner der Lösungen fielen Chromhydroxyd oder andere basische Chromsalze nachträglich aus

### Untersuchung der Verträglichkeit mit anderen färbenden Komplexverbindungen, die in den Färbelösungen enthalten sind:

Bei der Anwendung der Färbelösungen gibt es zwei verschiedene Auftragsmethoden: Auf eine unglasierte Keramikoberfläche wird zum Färben die Färbelösung oder eine Mischung bestehend aus mehreren Färbelösungen auf die Oberfläche durch eine geeignete Düse aufgesprüht oder im Siebdruckverfahren mit Rahmen und Walze aufgebracht.

Dabei muß die Färbelösung in die Oberfläche des Keramikrohlings eindringen und zwar kapillar bis zu einer gewissen Porentiefe. Die Farbintensität und der Farbeindruck bzw. Musterung hängen einmal von der Konzentration der Lösungen ab und weiterhin von der Verträglichkeit der färbenden Komplexverbindungen untereinander. Liegt eine Mischung von verschiedenen färbenden Komplexverbindungen vor, so kann es vor allem zur Koagulation oder Zerfall der Komplexe kommen. Bei der Mischung von Kobalt-(II)-komplexen, z.B. Kobalt-(II)-Citrat, die für sich angewendet einen blauen Farbton erzeugen, mit den erfindungsgemäß hergestelltem Chrom-(III)-komplexen findet keine Ausfällung von Komponenten der Lösungen statt. Bei der Vermischung der beiden Komplexe ergibt sich vielmehr ein intensiv grün-blauer Farbton auf der Keramikoberfläche nach dem Brennvorgang.

Die gute Verträglichkeit wird im wesentlichen durch den genau einstellbaren pH-Wert, der zwischen 3 und 3,5 beim erfindungsgemäß hergestelltem Produkt liegt, bestimmt.

**Untersuchung der Eindringtiefe der erfindungsgemäßen Chrom-(III)-Verbindung bei verschiedenen pH-Werten.**

Die erfindungsgemäß hergestellten Färbelösungen haben auch eine sehr gute Eindringtiefe in die Keramikoberfläche. Die hier erzielten Ergebnisse lassen sich der Tabelle 2 entnehmen:

Folgender Versuch wurde dazu mit einer dazu speziell geeigneten Keramikfliese (Gres porcellanato Type) durchgeführt:

Die ungebrannte, helle Keramikfliese wurde mit ca. 1,5 g Wasser besprüht. Danach wurde ein Tropfen der erfindungsgemäßen Färbelösung auf die Fliese aufgebracht und mit einem Pinsel in einer Linie verstrichen. Dies wurde 3x wiederholt, so daß insgesamt 4 Tropfen Färbelösung aufgetragen wurde. Danach wurde die Keramikfliese nochmals mit 1,5 g Wasser besprüht und nach dem Trocknen bei 1140 °C in einem Ofen gebrannt. Man sieht hier deutlich, daß die erfindungsgemäß hergestellte Chrom-(III)-Verbindung, die mit Ammoniak neutralisiert wurde, das beste Eindringverhalten zeigt.

Tabelle 2

|  | Cr(VI) Komplex St.d. Technik | Cr-oxalat KOH | Cr-oxalat NaOH | Cr-oxalat NH$_3$ | Cr-ethylendiamin 1:1 | Cr-ethylendiamin 1:2 |
|---|---|---|---|---|---|---|
| **Eindringtiefe** | ca. 2,0 mm | ca. 1,0 mm | ca. 2,0 mm | ca. 2,5 mm | ca. 1,0 mm | ca. 1,0 mm |

Eingesetzte Verbindungen:    Chrom-(III)-Oxalat 7%-ige wäßrige Lösung
Chrom-(III)-Acetat 7%-ige wäßrige Lösung
Natronlauge 50 %
Ammoniaklösung 25 %

**Versuchsdurchführung:**

Die Chromlösungen (50 ml) werden mit Natronlauge, bzw. Ammoniak auf verschiedene pH-Werte zwischen 2 bis 6 eingestellt. Die Lösungen werden dann mit einem Pinsel auf eine ungebrannte, unglasierte helle Fliese aufgetragen. Die untere Hälfte der Fliese wurde mit Wasser nachbehandelt. Die Fliese wird in einem geeignetem Ofen bei Temperaturen zwischen 600 und 1400 °C gebrannt, und zwar bei 600 °C etwa 360 Minuten (6 Stunden) und 60 Minuten (1 Stunde) bei 1400 °C. Danach wurde die Fliese aufgeschnitten und die Eindringtiefe der Färbelösung in die Fliese bewertet.

Tabelle 3

| Chromacetat | pH-Wert | Eindringtiefe in mm |
|---|---|---|
| Original* | 2,35 | 1,5 |
| 0,2 g Ammoniak | 3,5 | 1,5 |
| 0,15 g NaOH | 3,5 | 1,5 |
| 2,4 g Ammoniak | 6,0 | 1,0 |
| 2,4 g NaOH | 6,0 | 1,0 |

*Original bedeutet, daß das Chromacetat ohne neutralisierende Zusätze untersucht wurde

Tabelle 4

| Chromoxalat | pH-Wert | Eindringtiefe in mm |
|---|---|---|
| *Original | 0 | 1,0 |
| 6,0 g Ammoniak | 0 | 1,0 |
| 7,1 g NaOH | 3,5 | 1,5 |
| 12 g Ammoniak | 6,0 | 2,5 |
| 11,5 g NaOH | 6,0 | 2,0 |

*Original bedeutet, daß das Chromacetat ohne neutralisierende Zusätze untersucht wurde

## Dünnschichtchromatogramme der verschiedenen Chrom-(III)-Komplexe

Die besonderen Eigenschaften der erfindungsgemäßen Chrom-(III)-Komplexe zeigen sich auch bei der dünnschichtchromatographischen Untersuchung im Vergleich mit Verbindugen nach dem Stand der Technik. Als Maß für die Beweglichkeit wird der sog. $R_f$-Wert herangezogen.
Der $R_f$-Wert ist definiert als eine Verhältniszahl, die gebildet wird aus der Entfernung Start-Zonenmittelpunkt zur Entfernung Start-Laufmittelfront.

$$R_f\text{-Wert} = \frac{\text{Entfernung Start-Zonenmittelpunkt}}{\text{Entfernung Start-Laufmittelfront}}$$

Der $R_f$-Wert schwankt zwischen 0 und 1, wobei der Wert 0 den Startpunkt und der Wert 1 die Laufmittelfront bedeutet. Als Trägermaterial wurde eine mikrokristalline Cellulose verwendet und als Laufmittel reines vollentsalztes Wasser mit pH-Wert 7. Aus den gemessenen $R_f$-Werten kann man folgern, daß die erfindungsgemäßen Chrom-(III)-Oxalate gegenüber den Chrom-(III)-Acetaten eine höhere Beweglichkeit im Laufmittel zeigen. Dies erlaubt wiederum Rückschlüsse auf das Eindringverhalten der Chrom-(III)-Oxalat-Lösungen in ein Fliesenmaterial zu ziehen, d.h., je höher die Beweglichkeit, ausgedrückt in $R_f$-Werten, um so besser ist das Eindringverhalten in die Keramikoberfläche.

Tabelle 5

| Bezeichnung | Komponente | $R_f$-Wert |
|---|---|---|
| Chromacetat nach St. d. Technik | Chromacetat | 0,3 |
| Chromoxalat erfindungsgemäß | Chromoxalat | 0,7 |

## Patentansprüche

1. Verwendung von neutralisierten oder teilneutralisierten Chrom-(III)-Komplexverbindungen, die Bestandteil von keramischen Färbelösungen sind und die erhältlich sind durch die Umsetzung einer Chrom-(III)-Verbindung mit einer organischen Dicarbonsäure der allg. Formel (COOH)-(CH$_2$)$_n$-(COOH), wobei der Index n von 0 bis 10 läuft oder einer ungesättigten, organischen Dicarbonsäure, insbesondere Maleinsäure und Fumarsäure, indem man die Chrom-(III)-Verbindung mit der wäßrigen Lösung der Carbonsäure bei Temperaturen zwischen 40 bis 60 °C, vorzugsweise bei 55 °C unter Rühren behandelt und die Lösung nach der Filtration, mit Alkali, vorzugsweise mit konz. Ammoniak, auf einen pH-Wert von 5,5 bis 6,5 einstellt, wobei die Chrom-(III)-Komplexlösung einen Chromgehalt von 5 bis 10 Gew. %, vorzugsweise einen Chromgehalt von 5 bis 7 Gew. % aufweist, zum Färben von unglasierten Keramikoberflächen.

## Claims

1. Use of neutralised or partially neutralised chromium(III) complex compounds which are a component of ceramic dye solutions and are obtainable by conversion of a chromium(III) compound with an organic dicarboxylic acid of the general formula (COOH)-(CH$_2$)$_n$-(COOH), where the index n runs from 0 to 10, or an unsaturated organic dicarboxylic acid, in particular maleic acid and fumaric acid, in that the chromium(III) compound is treated with the aqueous solution of the carboxylic acid at temperatures of between 40° and 60°C, and preferably at 55°C while stirring and, after filtration, the solution is brought to a pH value of between 5.5 and 6.5 with an alkali, preferably concentrated ammonia, whereby the chromium(III) complex solution has a chromium content of between 5% and 10% by weight, and preferably a chromium content of between 5% and 7% by weight, for colouring unglazed ceramic surfaces.

**Revendications**

1. Utilisation de composés chrome (III) complexes neutralisés ou partiellement neutralisés en tant que parties intégrante de solutions colorantes céramiques, disponibles par décomposition d'un composé chrome (III) avec un acide dicarboxylique organique de formule générale (COOH)-(CH$_2$)$_n$-(COOH), l'indice n allant de 0 à 10, ou avec un acide dicarboxylique organique non saturé, notamment acide maléique et acide fumarique, en traitant le composé chrome (III) par agitation avec la solution aqueuse d'acide carboxylique à une température comprise entre 40 et 60 °C, préférentiellement à 55 °C, et en portant la solution après filtration à une valeur pH entre 5,5 et 6,5, avec un alcali, préférentiellement de l'ammoniac concentré, la solution complexe chrome (III) présentant une teneur en chrome de 5 à 10 % en poids, préférentiellement de 5 à 7 % en poids, pour la coloration de surfaces céramiques non émaillées.